# EUROPEAN PATENT SPECIFICATION

(11) **EP 4 500 031 B1**
(45) Date of publication and mention of the grant of the patent: **15.07.2026**
(21) Application number: 23776782.7
(22) Date of filing: 13.03.2023
(51) Int. Cl.: F16B 5/02

(54) **RESILIENT FASTENER SYSTEM**
ELASTISCHES BEFESTIGUNGSSYSTEM
SYSTÈME DE FIXATION ÉLASTIQUE

(30) Priority: 28.03.2022 US 202217705902
(43) Date of publication of application: 05.02.2025
(73) Proprietor: Raytheon Company, Tewksbury, MA 01876 (US)
(72) Inventor: LAYMAN, Ronald Curtis, Tucson, Arizona 85712 (US); ATHEY, Damian C., Tucson, Arizona 85713 (US)
(74) Representative: Crowell & Moring U.K. LLP
(86) International application number: PCT/US2023/064241
(87) International publication number: WO 2023/212454

(56) References cited:
- DE-A1- 102013 011 967
- US-A- 5 259 714
- US-A- 5 401 131
- US-A1- 2008 138 168

## Description

### Technical Field

The present disclosure relates generally to fasteners and more particularly to fasteners for joints in dynamic temperature environments.

### Background

Fastened joints subjected to extreme changes in temperature, such as those in hypersonic missile applications, typically experience detrimental effects as a result of thermal expansion. For example, such joints may experience detrimental changes in clamping force as a result of such thermal expansion, as the fastener (e.g., a bolt, a screw, or other fastening device) and the fastened elements (e.g., flanges on a missile airframe or other components of the missile) thereof typically have different rates of thermal expansion. These differences in rates of thermal expansion may result in a decreased clamping force on the joint, which may lead to a loosening of the joint, or an increased clamping force of the joint, which may lead to excessive stress and deformation or fracture of the fastener and/or the fastened elements.

Such detrimental thermal expansion effects are typically mitigated by the design of the fastened joints. For example, some conventional designs use fasteners that sufficiently match the coefficients of thermal expansion (CTE's) of the fastened elements such that the rates of thermal expansion of the fastened elements and the fasteners are sufficiently similar in an effort to maintain the clamping force of the fastened joint relatively consistent throughout exposure to extreme changes in temperature. Additionally or alternatively, some designs add a spring or other resilient member in compression, such as a Belleville washer, to the fastened joints to accommodate for the differences in rates of thermal expansion between the fastened elements and the fasteners in an effort to reduce the resultant change in clamping force of the fastened joint.

For many applications, however, these designs are not feasible. For example, in hypersonic missile airframe applications, the materials required for hypersonic missile airframe joints typically do not have sufficiently similar CTE's (such as ceramic matrix composite (CMC) flanges attached with refractory metal fasteners). Even if they did, however, temperature changes in such applications may be transient, leading to differences in rates of thermal expansion of the fastened elements and the fasteners regardless of them having sufficiently similar CTE's. Furthermore, the addition of spring or other resilient members to the fastened joints adds significant height to the fastened joint. Many applications, however, do not have the available space allocation for such added height.
DE 10 2013 011967 A1 discloses a screw connection element having a screw provided with a bolt shank and a screw head. A case is secured at the screw and/or a nut, so that the case is deformed during screwing the nut in the bolt shank for radial and/or axial bias. Components are connected with one another. The bolt shank comprises an external thread. The nut comprises an internal thread. The case is arranged between the screw head and the nut in axial direction. Annular concave shaping geometry is formed at an end region of the bolt shank.
US 5 259 714 A discloses a blind fastener assembly.
US 2008/0138168 A1 discloses a blind fastener and method.

### Summary

An improved fastener system for fastening at least two elements together is described herein. The fastener system includes a fastener and a fastener insert. The fastener system solves the above-mentioned problems associated with conventional solutions to the detrimental thermal expansion effects of fastened joints subjected to extreme changes in temperature by incorporating the fastener insert having a resilient shaft portion integrally connected to and coaxially aligned with an internally threaded shaft portion of a hollow shaft of the resilient fastener insert. The resilient shaft portion of the fastener insert is continuous, unitary and formed as a single piece with the internally threaded shaft portion of the hollow shaft of the fastener insert, without adding significant height to the fastener system in the axial direction. The resilient shaft portion of the fastener insert is placed in tension while the fastener system fastens the at least two elements together (with a threaded shaft of the fastener secured to the internally threaded shaft portion of the hollow shaft of the fastener insert) such that it can deform to accommodate for thermal expansion of at least one of the fastener, the fastener insert, and at least one of the at least two elements. This effectively maintains the clamping force formed by the fastener system on the at least two elements and therefore, excessive deformation or fracture of the fastener system (including the fastener and the fastener insert) and/or the at least two elements can be prevented. According to an aspect of the invention, there is provided a fastener system according to appended claim 1.
According to another aspect of the invention, there is provided a method of fastening at least two elements together according to appended claim 12.

According to this disclosure, a fastener insert includes a hollow shaft extending in an axial direction and configured to receive a threaded fastener at a first axial end of the hollow shaft. The fastener also includes a supporting flange extending radially outward from a second axial end of the hollow shaft. The hollow shaft includes an internally threaded shaft portion. The internally threaded shaft portion is configured to secure the threaded fastener received in the hollow shaft. The hollow shaft also includes a resilient shaft portion formed as a unitary single piece with the internally threaded shaft portion.

According to the invention, the resilient shaft portion is formed axially between the internally threaded shaft portion of the hollow shaft and the supporting flange.

According to another embodiment of any paragraph(s) of this disclosure, the resilient shaft portion is formed by at least one cutout in the hollow shaft.

According to another embodiment of any paragraph(s) of this disclosure, the at least one cutout includes a plurality of cutouts arranged circumferentially around the hollow shaft.

According to another embodiment of any paragraph(s) of this disclosure, at least one of the at least one cutout is triangular in shape.

According to another embodiment of any paragraph(s) of this disclosure, at least one of the at least one cutout is circular in shape.

According to another embodiment of any paragraph(s) of this disclosure, at least one of the at least one cutout is linear in shape.

According to another embodiment of any paragraph(s) of this disclosure, a thickness of a circumferential wall of the resilient shaft portion is less than a thickness of the circumferential wall of the internally threaded shaft portion.

According to another embodiment of any paragraph(s) of this disclosure, a circumferential wall of the resilient shaft portion is axially corrugated.

According to the invention, a fastener system includes a fastener insert. The fastener insert includes a hollow shaft extending in an axial direction from a first axial end to a second axial end of the hollow shaft. The fastener insert also includes a supporting flange extending radially outward from the second axial end of the hollow shaft. The hollow shaft includes an internally threaded shaft portion and a resilient shaft portion formed as a unitary single piece with the internally threaded portion. The fastener system also includes a fastener having a threaded shaft received in the hollow shaft of the fastener insert at the first axial end and secured to the internally threaded shaft portion of the hollow shaft.

According to another embodiment of any paragraph(s) of this disclosure, a length of the threaded shaft of the fastener is less than or equal to a length of the internally threaded shaft portion of the hollow shaft of the fastener insert.

According to another embodiment of any paragraph(s) of this disclosure, a length of the threaded shaft of the fastener is greater than a length of the internally threaded shaft portion of the hollow shaft of the fastener insert and equal to or less than a length of the hollow shaft of the fastener insert.

According to the invention, the resilient shaft portion is formed axially between the internally threaded shaft portion of the hollow shaft and the supporting flange.

According to another embodiment of any paragraph(s) of this disclosure, the resilient shaft portion is formed by at least one cutout in the hollow shaft.

According to another embodiment of any paragraph(s) of this disclosure, the at least one cutout is at least one of triangular, circular, and linear in shape.

According to another embodiment of any paragraph(s) of this disclosure, a thickness of a circumferential wall of the resilient shaft portion is less than a thickness of the circumferential wall of the internally threaded shaft portion.

According to another embodiment of any paragraph(s) of this disclosure, a circumferential wall of the resilient shaft portion is axially corrugated.

According to this disclosure, a method of fastening at least two elements together using the fastener system of the invention includes the step of inserting a first axial end of a hollow shaft of a fastener insert into a through hole extending through the at least two elements such that a supporting flange extending radially outward from a second axial end of the hollow shaft abuts an outer surface of a first element of the at least two elements. The method also includes the step of inserting a threaded shaft of a fastener into the first axial end of the hollow shaft and securing the threaded shaft of the fastener into an internally threaded shaft portion of the hollow shaft such that a head of the fastener abuts an outer surface of a second element of the at least two elements. The method also includes the step of further securing the threaded shaft of the fastener into the internally threaded shaft portion of the hollow shaft such that tension is created on a resilient shaft portion of the hollow shaft. The resilient shaft portion of the hollow shaft is formed as a unitary single piece with the internally threaded shaft portion of the hollow shaft. The method then includes the step of forming a resilient clamping force on the at least two elements.

According to another embodiment of any paragraph(s) of this disclosure, the method further includes the step of accommodating for an axial thermal expansion of at least one of the fastener, the fastener insert, and at least one of the at least two elements when exposed to a change in temperature.

According to another embodiment of any paragraph(s) of this disclosure, the step of accommodating includes axially deforming the resilient shaft portion of the hollow shaft when the at least one of the fastener, the fastener insert, and at least one of the at least two elements undergoes the axial thermal expansion.

The following description and the annexed drawings set forth in detail certain illustrative embodiments described in this disclosure. These embodiments are indicative, however, of but a few of the various ways in which the principles of this disclosure may be employed. Other objects, advantages and novel features will become apparent from the following detailed description when considered in conjunction with the drawings.

### Brief Description of Drawings

The annexed drawings show various aspects of the disclosure.
FIG. 1 is a perspective view of a fastener system configured to fasten at least two elements, shown in cross-section.
FIG. 2A is a perspective view of a fastener insert of a fastener system.
FIG. 2B is a side view of the fastener insert of FIG. 2A.
FIG. 2C is another side view of the fastener insert of FIG. 2A.
FIG. 3A is a perspective view of another fastener insert of a fastener system.
FIG. 3B is a side view of the fastener insert of FIG. 3A.
FIG. 3C is cross-sectional side view of the fastener insert of FIG. 3A.
FIG. 4A is a perspective view of another fastener insert of a fastener system.
FIG. 4B is a side view of the fastener insert of FIG. 4A.
FIG. 4C is a cross-sectional side view of the fastener insert of FIG. 4A.
FIG. 5A is a perspective view of another fastener insert of a fastener system.
FIG. 5B is a side view of the fastener insert of FIG. 5A.
FIG. 5C is a cross-sectional side view of the fastener insert of FIG. 5A.
FIG. 6A is a perspective view of another fastener insert of a fastener system.
FIG. 6B is a side view of the fastener insert of FIG. 6A.
FIG. 6C is a cross-sectional side view of the fastener insert of FIG. 6A.
FIG. 7 is a flowchart of a method for fastening at least two elements together.

### Detailed Description

Described herein is fastener system for fastening at least two elements together. The fastener system includes a fastener and a fastener insert which is configured to accommodate for thermal expansion of at least one of the fastener, the fastener insert, or at least one of the at least two elements which are fastened together with the fastener system, when they are subjected to changes in temperature. Specifically, the fastener insert includes a resilient shaft portion that is configured to deform in the axial direction so that it can accommodate any such thermal expansion. The resilient shaft portion of the fastener insert is continuous, unitary and formed as a single piece with an internally threaded shaft portion that is configured to secure the fastener to the fastener insert. With the accommodation of thermal expansion by the resilient shaft portion of the fastener insert, a clamping force of the fastener system on the at least two elements being fastened therewith is effectively maintained throughout variable thermal expansion of at least one of the fastener, the fastener insert, or at least one of the at least two elements.

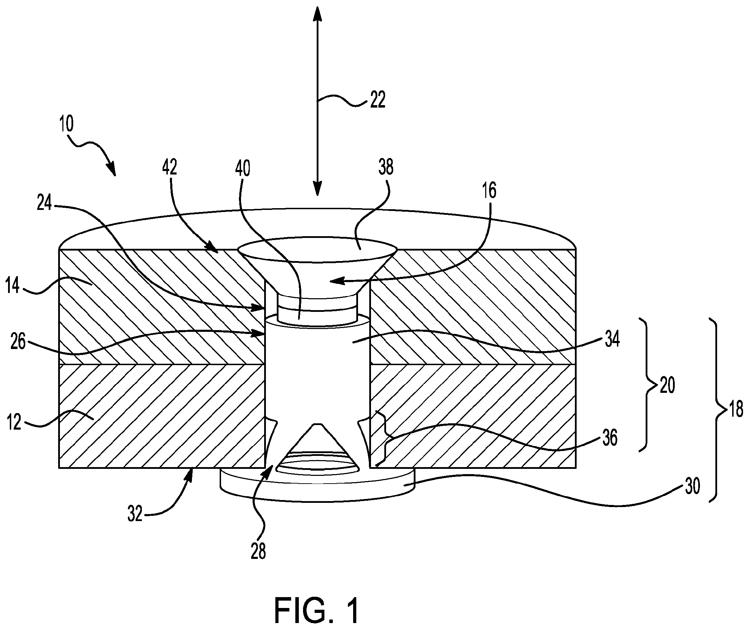

Turning to FIG. 1, an exemplary fastener system 10 will be described in more detail. The fastener system 10 is configured to fasten at least two elements, including a first element 12 and a second element 14, together. The fastener system 10 includes a fastener 16 and a fastener insert 18. The fastener system 10 may be used, for example, in any environment that experiences extreme changes in temperature, such as on hypersonic missiles and gas turbine engines, as non-limiting examples. Therefore, for example, the first element 12 and the second element 14 may include components on a hypersonic missile airframe such as flanges, control surfaces and leading-edge attachments which may be exposed to temperatures up to or exceeding 3,000°F, or components of a gas turbine engine such as gas turbine engine panels and bracket attachments which may be exposed to temperatures up to or exceeding 1,000°F. A thickness of the at least two elements in an axial direction 22, when fastened together, may be in a range of 0.64 centimeters (0.25 inch) to 15.24 centimeters (6 inches) for example 2.16 centimeters (0.85 inches). It will be understood, however, that these specific thicknesses, environments and examples of the first element 12 and the second element 14 are provided as non-limiting examples, and that the fastener system 10 described herein may be applicable to other environments that experience extreme changes in temperature, and the first element 12 and the second element 14 that the fastener system 10 is configured to fasten together may be of another size and may be any other fastened components in those environments.

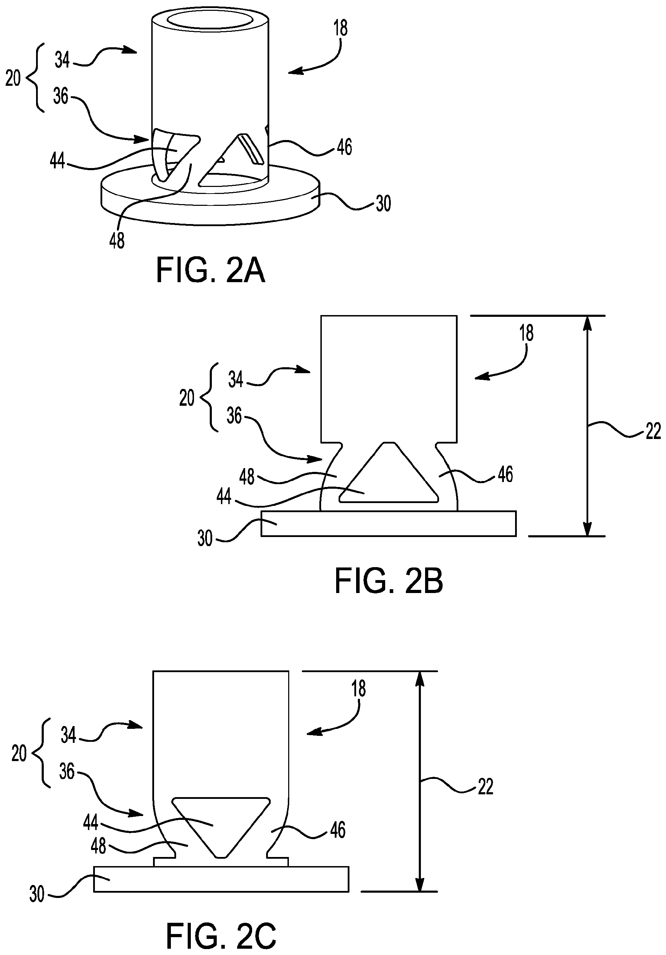

The fastener insert 18 includes a hollow shaft 20 configured to extend in the axial direction 22 through a through hole 24 of the at least two elements, including the first element 12 and the second element 14. The hollow shaft 20 has a first axial end 26 and a second axial end 28 and may be cylindrical in shape. A length of the hollow shaft 20 in the axial direction may be in the range of 0.64 centimeters (0.25 inches) to 15.24 centimeters (6.0 inches), for example 1.65 centimeters (0.65 inches). An internal diameter of the hollow shaft 20 may be in the range of 0.48 centimeters (0.19 inches) to 2.54 centimeters (1 inch), for example 0.79 centimeters (0.31 inches). The fastener insert 18 also includes a supporting flange 30 extending radially outward from the second axial end 28 of the hollow shaft 18 such that when the first axial end 26 of the hollow shaft 18 is inserted into the through hole 24, the supporting flange 30 abuts an outer surface 32 of the first element 12. A diameter of the supporting flange 30 may be in the range of 0.64 centimeters (0.25 inch) to 7.62 centimeters (3 inches), for example 1.91 centimeters (0.75 inches). As will be described in more detail with reference to FIGS. 2A-6C, the hollow shaft 20 includes an internally threaded shaft portion 34 and a resilient shaft portion 36 formed as a unitary single piece with the internally threaded shaft portion 34. The resilient shaft portion 36 may be formed between the internally threaded shaft portion 34 of the hollow shaft 20 and the supporting flange 30. In general, a length of the internally threaded shaft portion 34 may be in the range of 0.48 centimeters (0.19 inch) to 14.61 centimeters (5.75 inches), for example 1.65 centimeters (0.65 inches), and a length of the resilient shaft portion 36 may be in the range of 0.16 centimeters (0.06 inch) to 13.97 centimeters (5.5 inches), for example 0.51 centimeters (0.20 inches). It will be understood, however, that the dimensions of the fastener insert 18 described herein are provided as non-limiting examples, and that other dimensions may be applicable to the fastener insert 18 depending on the environment and application in which it is used.

The fastener 16 is a threaded fastener having a head 38 and a threaded shaft 40 extending in the axial direction 22 from the head 38. The hollow shaft 20 of the fastener insert 18 is configured to receive the threaded shaft 40 of the fastener 16 at the first axial end 26 of the hollow shaft 20. Accordingly, a diameter of the threaded shaft 40 of the fastener 16 may correspond to the inner diameter of the hollow shaft 20 and may therefore be in a range of 0.48 centimeters (0.19 inch) to 2.54 centimeters (1 inch), for example 0.79 centimeters (0.31 inches). As with the dimensions of the hollow shaft 20, however, it is understood that the dimensions of the fastener 16 described herein are provided as non-limiting examples, and other dimensions of the fastener 16 may be applicable. The internally threaded shaft portion 34 of the hollow shaft 20 is configured to secure the threaded shaft 40 of the fastener 16 such that the head 38 of the fastener abuts an outer surface 42 of the second element 14. The threaded shaft 40 of the fastener 16 may have a length sufficient to ensure a strong and secure connection between the fastener 16 and the internally threaded shaft portion 34 of the hollow shaft 20 of the fastener insert 18 when the threaded shaft 40 is secured by the internally threaded shaft portion 34. That is, the length of the threaded shaft 40 may be less than or equal to a length of the internally threaded shaft portion 34 of the hollow shaft 20 of the fastener insert 18. However, the length of the threaded shaft 40 may alternatively be greater than the length of the internally threaded shaft portion 34 of the hollow shaft 20. In either case, the length of the threaded shaft 40 may be equal to or less than a length of the hollow shaft 20 of the fastener insert 18.

When the threaded shaft 40 of the fastener 16 is further secured in the internally threaded portion 34 of the hollow shaft 20 of the fastener insert 18, with the supporting flange abutting the outer surface 32 of the first element 12 and the head 38 of the fastener 16 abutting the outer surface 42 of the second element 14, an axial preloaded tension is created on the resilient shaft portion 36 of the hollow shaft 20 of the fastener insert 18. This tension imparts a clamping force on the at least two elements including the first element 12 and the second element 14, fastening the at least two elements together. As will be described in more detail below, due to the resiliency of the resilient shaft portion 36 (in particular, the ability of the resilient shaft portion 36 to deform in the axial direction), the clamping force is a resilient clamping force that accommodates axial thermal expansion of at least one of the fastener 16, the fastener insert 18 and at least one of the at least two elements (e.g., the first element 12 and/or the second element 14).

The fastener insert 18 is configured to have adequate strength to support an axial preloaded tension in order to achieve the required clamping force on the at least two elements 12, 14. As the axial preloaded tension may be sustained at elevated temperatures, the fastener insert 18 may be made with a suitable high temperature/high strength material. For example, for temperatures up to approximately 3,000°F, the fastener insert 18 may be made with ultra-high temperature ceramics (UHTC's) and/or refractory metals such as tungsten, molybdenum alloys (e.g., TZM), columbium (niobium), and/or tantalum alloys. For temperatures up to approximately 1,800°F, the fastener insert 18 may be made with nickel super alloys such as Inconel. For temperatures up to approximately 1,200°F, the fastener insert 18 may be made with titanium and/or stainless-steel alloys. Each of these materials have coefficients of thermal expansion (CTE's) in an approximate range of 3 to 10 micro-in/in/°F. This can exceed the CTE's of the at least two elements, including the first element 12 and the second element 14, which are fastened together. For example, for high temperature applications, the at least two elements may be anisotropic ceramic matrix composite materials (CMC's). It will be understood, however, that the specific materials and CTE's described above are provided as non-limiting examples, and that other materials and CTE's may be applicable to the fastener insert 18 depending on the environment and application for which it is used.

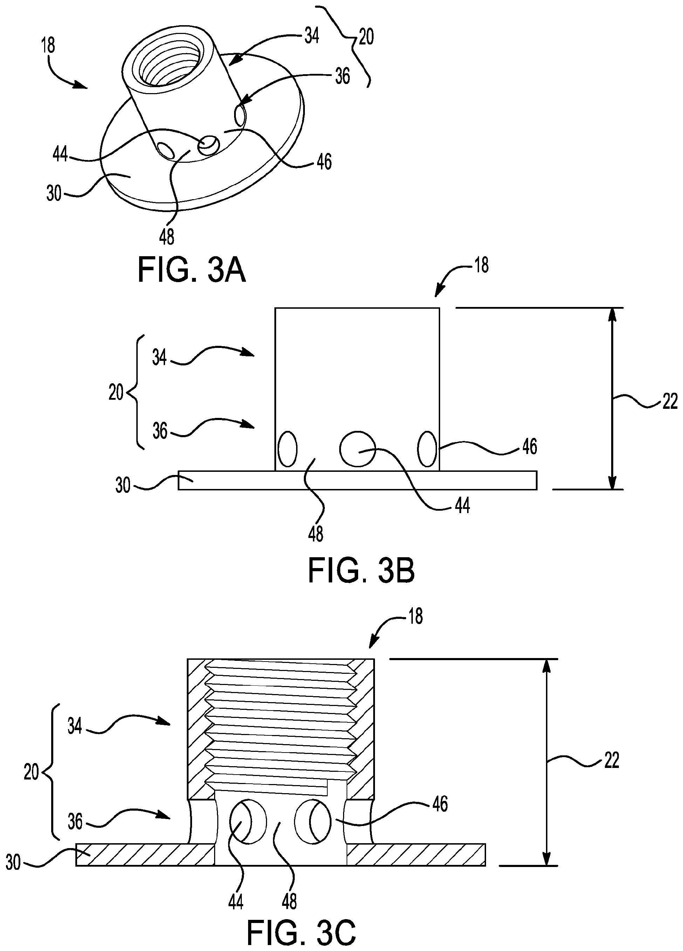

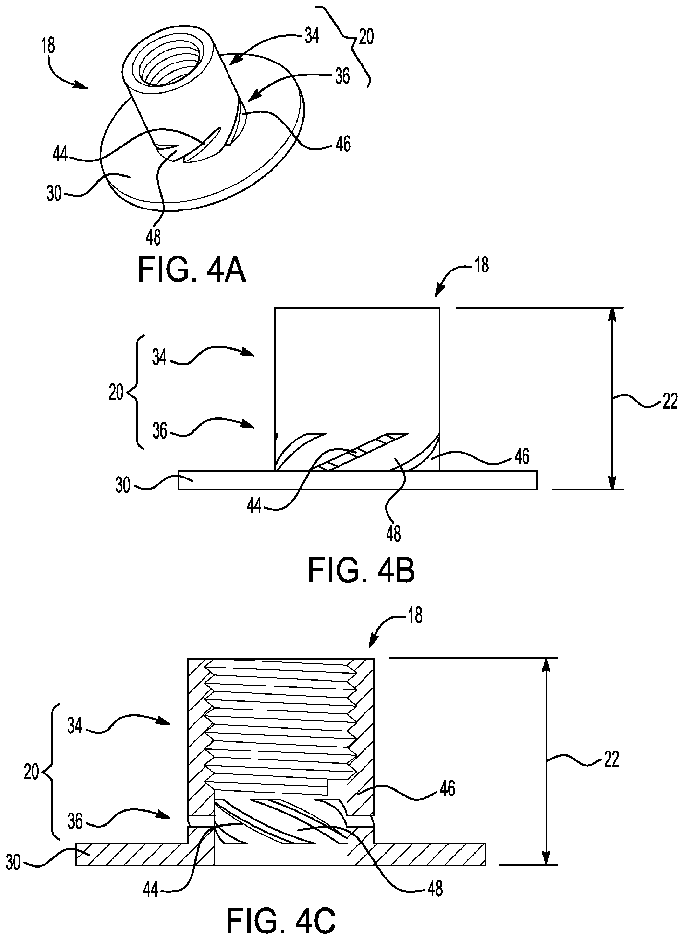

The resilient shaft portion 36 of the hollow shaft 20 of the fastener insert 18 may have a variety of forms that allow it to sustain the axial preloaded tension and make it deformable in the axial direction. For example, with reference to FIG. 2A to FIG. 4C, the resilient shaft portion 36 may be formed with at least one cutout 44 in the hollow shaft 20. The at least one cutout 44 is formed through a circumferential wall 46 of the resilient shaft portion 36. The at least one cutout 44 may include a plurality of cutouts 44 arranged circumferentially around the circumferential wall 46 of the resilient shaft portion 36 of the hollow shaft 20. As depicted in FIG. 2A-C, at least one of the at least one cutout 44 may be triangular in shape. As depicted in FIGS. 3A-C, at least one of the at least one cutout 44 may be circular in shape. As depicted in FIGS. 4A-C, at least one of the at least one cutout 44 may be linear in shape. It will be understood that the shape, number and arrangements of the cutouts 44 described and depicted herein are provided as non-limiting examples and that other shapes, numbers and arrangements of cutouts 44 may be applicable to the resilient shaft portion 36 of the hollow shaft 20 to make it deformable in the axial direction. For example, in any embodiment, one or more deformable portions 48 of the resilient shaft portion 36 are created between the at least one cutout 44. The deformable portions 48 are deformable in the axial direction such that the resilient shaft portion 36 is deformable in the axial direction and can accommodate for axial thermal expansion of at least one of the fastener 16, the fastener insert 18 and at least one of the at least two elements 12, 14 when exposed to a change in temperature.

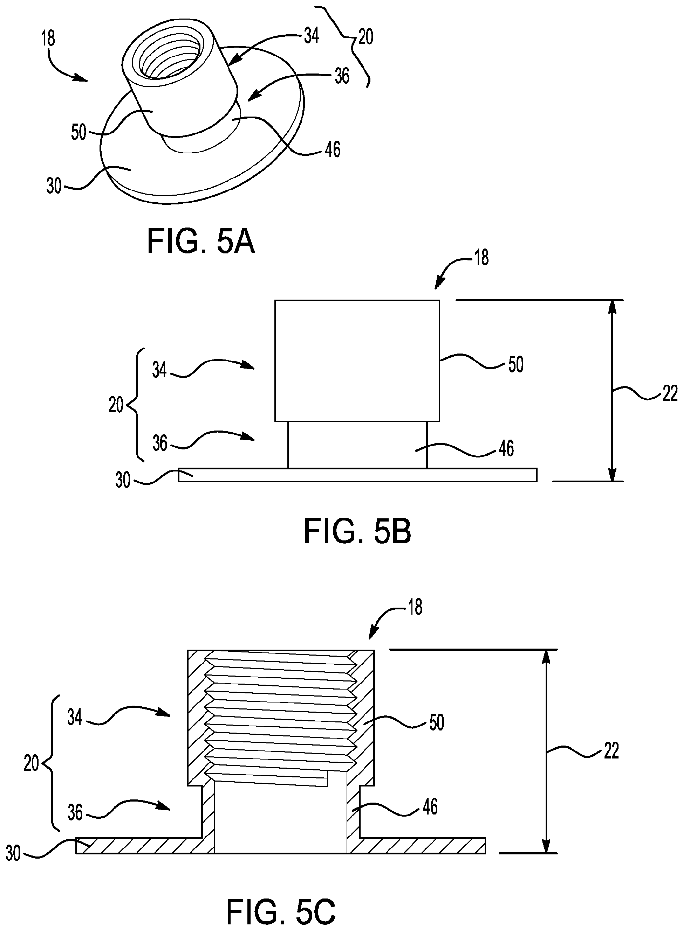

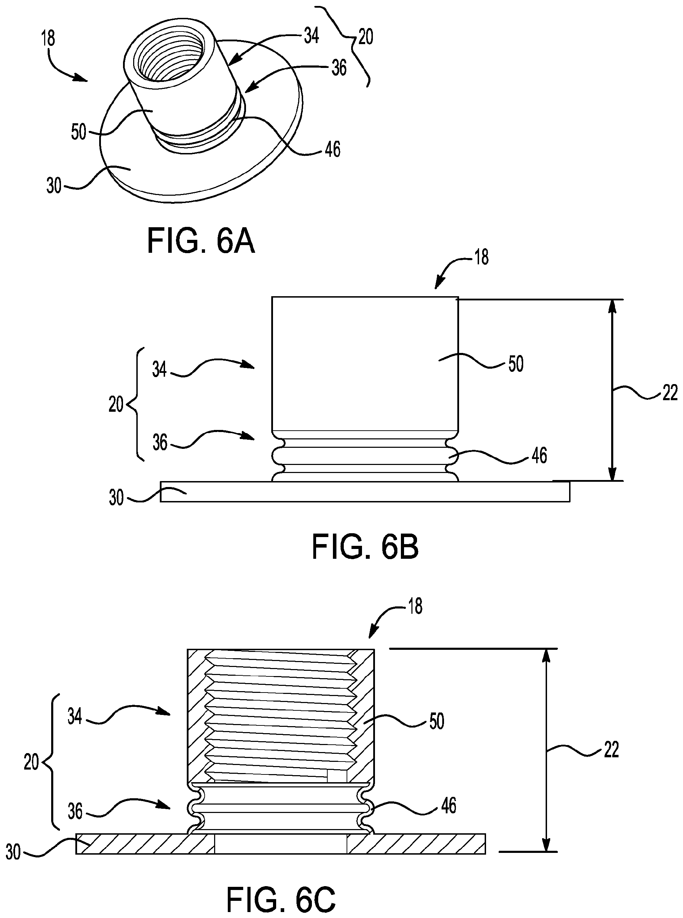

Additionally or alternatively, the circumferential wall 46 of the resilient shaft portion 36 may be formed to have different properties than a circumferential wall 50 of the internally threaded shaft portion 34 of the hollow shaft 20 that make it deformable in the axial direction. For example, with reference to FIGS. 5A-C, the circumferential wall 46 of the resilient shaft portion 36 may have a thickness that is less than a thickness of the circumferential wall 50 of the internally threaded shaft portion 34. The thickness of the circumferential wall 46 of the resilient shaft portion 36 may be in a range of 0.03 centimeters (0.01 inch) to 0.32 centimeters (0.125 inch). The thickness of the circumferential wall 50 of the internally threaded shaft portion 34 may be in a range of 0.089 centimeters (0.035 inch) to 0.635 centimeters (0.25 inch). In an embodiment, for example, the thickness of the circumferential wall 46 of the resilient shaft portion 36 may be approximately 10-15% of the diameter of the internally threaded shaft portion 34. Accordingly, the circumferential wall 46 of the resilient shaft portion 36 may be weaker and less rigid than the circumferential wall 50 of the internally threaded shaft portion 34 such that it can deform in the axial direction. Additionally or alternatively, as depicted in FIGS. 6A-C, the circumferential wall 46 of the resilient shaft portion 36 may be axially corrugated, or may have alternating areas of reduced thickness and increased thickness extending along the axial direction. Accordingly, the circumferential wall 46 of the resilient shaft portion 36 may deform in the axial direction.

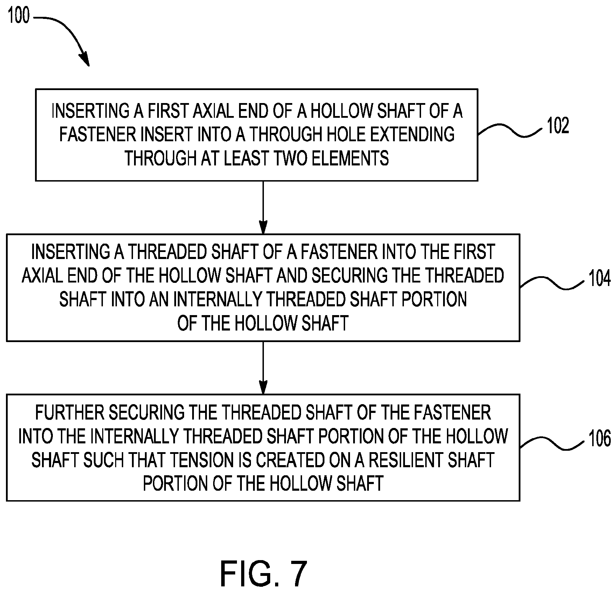

With reference to FIG. 7, a method 100 of fastening at least two elements together is depicted. The method 100 includes a step 102 of inserting a first axial end of a hollow shaft of a fastener insert into a through hole extending through the at least two elements such that a supporting flange extending radially outward from a second axial end of the hollow shaft abuts an outer surface of the first element of the at least two elements. The at least two elements may be the same as the at least two elements previously described, including the first element 12 and the second element 14, and the fastener insert may be the same as the fastener insert 18 previously described, including the hollow shaft 20 and the supporting flange 30. The method 100 then includes a step 104 of inserting a threaded shaft of a fastener into the first axial end of the hollow shaft and securing the threaded shaft of the fastener into an internally threaded shaft portion of the hollow shaft such that a head of the fastener abuts an outer surface of the second element of the at least two elements. The fastener may be the same as the fastener 16 previously described.

The method 100 then includes a step 106 of further securing the threaded shaft of the fastener into the internally threaded shaft portion of the hollow shaft such that tension is created on a resilient shaft portion of the hollow shaft. The resilient shaft portion of the hollow shaft is formed as a unitary single piece with the internally threaded shaft portion of the hollow shaft, as described previously with the resilient shaft portion 36 and the internally threaded shaft portion 34 of the hollow shaft 20. The tension imparts a resilient clamping force on the at least two elements.

The method 100 may therefore include accommodating for an axial thermal expansion of at least one of the fastener, the fastener insert, and at least one of the at least two elements when exposed to a change in temperature. The accommodating includes axially deforming the resilient shaft portion of the hollow shaft when the at least one of the fastener, the fastener insert, and at least one of the at least two elements undergoes the axial thermal expansion.

Although the above disclosure has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments. In addition, while a particular feature may have been described above with respect to only one or more of several illustrated embodiments, such feature may be combined with one or more other features of the other embodiments, as may be desired and advantageous for any given or particular application.

The scope of the invention is defined by the scope of the appended claims.

## Claims

1. A fastener system (10) for fastening at least two elements (12, 14) together, the fastener system comprising:
a threaded fastener (16) comprising a head (38) and a threaded shaft (40) extending in an axial direction (22) from the head, the head configured to abut an outer surface (42) of a first one (14) of the at least two elements; and
a fastener insert (18) comprising:
a hollow shaft (20) extending in the axial direction for insertion into a through hole (24) extending through the at least two elements, the hollow shaft configured to receive the threaded shaft at a first axial end (26) of the hollow shaft; and
a supporting flange (30) extending radially outward from a second axial end (28) of the hollow shaft, the supporting flange configured to abut an outer surface (32) of a second one (12) of the at least two elements;
wherein the hollow shaft includes:
an internally threaded shaft portion (34) configured to secure the threaded shaft received in the hollow shaft, and
a resilient shaft portion (36) formed as a unitary single piece with the internally threaded shaft portion, wherein the resilient shaft portion is formed axially between the internally threaded shaft portion and the supporting flange.

2. The fastener system (10) of claim 1, wherein the resilient shaft portion (36) is formed by at least one cutout (44) in the hollow shaft (20).

3. The fastener system (10) of claim 2, wherein the at least one cutout (44) includes a plurality of cutouts arranged circumferentially around the hollow shaft (20).

4. The fastener system (10) of claim 2 or claim 3, wherein at least one of the at least one cutout (44) is triangular in shape.

5. The fastener system (10) of claim 2 or claim 3, wherein at least one of the at least one cutout (44) is circular in shape.

6. The fastener system (10) of claim 2 or claim 3, wherein at least one of the at least one cutout (44) is linear in shape.

7. The fastener system (10) of any preceding claim, wherein a thickness of a circumferential wall (46) of the resilient shaft portion (36) is less than a thickness of the circumferential wall of the internally threaded shaft portion (34).

8. The fastener system (10) of any preceding claim, wherein a circumferential wall (46) of the resilient shaft portion (36) is axially corrugated.

9. The fastener system (10) of any preceding claim, wherein a length of the threaded shaft (40) of the threaded fastener (16) is less than or equal to a length of the internally threaded shaft portion (34) of the hollow shaft (20) of the fastener insert (18).

10. The fastener system (10) of any one of claims 1 to 8, wherein a length of the threaded shaft (40) of the threaded fastener (16) is greater than a length of the internally threaded shaft portion (34) of the hollow shaft (20) of the fastener insert (18) and equal to or less than a length of the hollow shaft of the fastener insert.

11. A fastened assembly, comprising:
a fastener system (10) according to any preceding claim; and
two said elements (12, 14),
wherein:
the hollow shaft (20) is inserted in the through hole (24) and the supporting flange (30) is in abutment with the outer surface (32) of the second one (12) of the two elements; and
the threaded shaft (40) is secured into the internally threaded shaft portion (34) and the head (38) is in abutment with the outer surface (42) of the first one (14) of the two elements,
such that tension is created on the resilient shaft portion (36) and imparts a resilient clamping force on the two elements.

12. A method of fastening at least two elements (12, 14) together using a fastener system according to any one of claims 1 to 10, the method comprising the steps of:
inserting the first axial end (26) of the hollow shaft (20) of the fastener insert (18) into the through hole (24) extending through the at least two elements such that the supporting flange (30) extending radially outward from the second axial end (28) of the hollow shaft abuts the outer surface (32) of the second element (12) of the at least two elements;
inserting the threaded shaft (40) of the threaded fastener (16) into the first axial end of the hollow shaft and securing the threaded shaft of the threaded fastener into the internally threaded shaft portion (34) of the hollow shaft such that the head (38) of the threaded fastener abuts the outer surface of the first element (14) of the at least two elements; and
further securing the threaded shaft of the fastener into the internally threaded shaft portion of the hollow shaft such that tension is created on the resilient shaft portion (36) of the hollow shaft to impart a resilient clamping force on the two elements.

13. The method of claim 12, further comprising the step of accommodating for an axial thermal expansion of at least one of the fastener (16), the fastener insert (18), and at least one of the at least two elements (12, 14) when exposed to a change in temperature.

14. The method of claim 13, wherein the accommodating includes axially deforming the resilient shaft portion (36) of the hollow shaft (20) when the at least one of the fastener (16), the fastener insert (18), and at least one of the at least two elements (12, 14) undergoes the axial thermal expansion.

## Patentansprüche

1. Befestigungssystem (10) zum Miteinander-Befestigen von mindestens zwei Elementen (12, 14), das Befestigungssystem umfassend:
ein Gewindebefestigungselement (16), das einen Kopf (38) und einen Gewindeschaft (40) umfasst, der sich in einer axialen Richtung (22) von dem Kopf erstreckt, wobei der Kopf konfiguriert ist, um an einer Außenoberfläche (42) eines ersten (14) der mindestens zwei Elemente anzuliegen; und
einen Befestigungseinsatz (18), umfassend:
einen Hohlschaft (20), der sich in der axialen Richtung zur Einführung in ein Durchgangsloch (24) erstreckt, das sich durch die mindestens zwei Elemente erstreckt, wobei der Hohlschaft konfiguriert ist, um den Gewindeschaft an einem ersten axialen Ende (26) des Hohlschafts aufzunehmen; und
einen Stützflansch (30), der sich von einem zweiten axialen Ende (28) des Hohlschafts radial nach außen erstreckt, wobei der Stützflansch konfiguriert ist, um an einer Außenoberfläche (32) eines zweiten (12) der mindestens zwei Elemente anzuliegen;
wobei der Hohlschaft einschließt:
einen Innengewindeschaftabschnitt (34), der konfiguriert ist, um den in dem Hohlschaft aufgenommenen Gewindeschaft zu sichern, und
einen elastischen Schaftabschnitt (36), der als ein einstückiges, einheitliches Teil mit dem Innengewindeschaftabschnitt ausgebildet ist, wobei der elastische Schaftabschnitt axial zwischen dem Innengewindeschaftabschnitt und dem Stützflansch ausgebildet ist.

2. Befestigungssystem (10) nach Anspruch 1, wobei der elastische Schaftabschnitt (36) durch mindestens einen Ausschnitt (44) in dem Hohlschaft (20) gebildet ist.

3. Befestigungssystem (10) nach Anspruch 2, wobei der mindestens eine Ausschnitt (44) eine Vielzahl von Ausschnitten einschließt, die in Umfangsrichtung um den Hohlschaft (20) herum angeordnet sind.

4. Befestigungssystem (10) nach Anspruch 2 oder Anspruch 3, wobei mindestens einer des mindestens einen Ausschnitts (44) dreieckig in der Form ist.

5. Befestigungssystem (10) nach Anspruch 2 oder Anspruch 3, wobei mindestens einer des mindestens einen Ausschnitts (44) kreisförmig in der Form ist.

6. Befestigungssystem (10) nach Anspruch 2 oder Anspruch 3, wobei mindestens einer des mindestens einen Ausschnitts (44) linear in der Form ist.

7. Befestigungssystem (10) nach einem der vorhergehenden Ansprüche, wobei eine Dicke einer Umfangswand (46) des elastischen Schaftabschnitts (36) geringer ist als eine Dicke der Umfangswand des Innengewindeschaftabschnitts (34).

8. Befestigungssystem (10) nach einem der vorhergehenden Ansprüche, wobei eine Umfangswand (46) des elastischen Schaftabschnitts (36) axial gewellt ist.

9. Befestigungssystem (10) nach einem der vorhergehenden Ansprüche, wobei eine Länge des Gewindeschafts (40) des Gewindebefestigungselements (16) kleiner oder gleich einer Länge des Innengewindeschaftabschnitts (34) des Hohlschafts (20) des Befestigungseinsatzes (18) ist.

10. Befestigungssystem (10) nach einem der Ansprüche 1 bis 8, wobei eine Länge des Gewindeschafts (40) des Gewindebefestigungselements (16) größer ist als eine Länge des Innengewindeschaftabschnitts (34) des Hohlschafts (20) des Befestigungseinsatzes (18) und gleich oder kleiner als eine Länge des Hohlschafts des Befestigungseinsatzes ist.

11. Befestigte Anordnung, umfassend:
ein Befestigungssystem (10) nach einem der vorhergehenden Ansprüche; und
zwei besagte Elemente (12, 14),
wobei:
der Hohlschaft (20) in das Durchgangsloch (24) eingesetzt ist und der Stützflansch (30) in Anlage mit der Außenoberfläche (32) des zweiten (12) der zwei Elemente ist; und
der Gewindeschaft (40) in dem Innengewindeschaftabschnitt (34) gesichert ist und der Kopf (38) in Anlage mit der Außenoberfläche (42) des ersten (14) der zwei Elemente ist,
sodass eine Spannung auf dem elastischen Schaftabschnitt (36) erzeugt wird und eine elastische Klemmkraft auf die zwei Elemente ausübt.

12. Verfahren zum Miteinander-Befestigen von mindestens zwei Elementen (12, 14) unter Verwendung eines Befestigungssystems nach einem der Ansprüche 1 bis 10, das Verfahren umfassend die Schritte des:
Einführens des ersten axialen Endes (26) des Hohlschafts (20) des Befestigungseinsatzes (18) in das Durchgangsloch (24), das sich durch die mindestens zwei Elemente erstreckt, sodass der Stützflansch (30), der sich von dem zweiten axialen Ende (28) des Hohlschafts radial nach außen erstreckt, an der Außenoberfläche (32) des zweiten Elements (12) der mindestens zwei Elemente anliegt;
Einführens des Gewindeschafts (40) des Gewindebefestigungselements (16) in das erste axiale Ende des Hohlschafts und Sicherns des Gewindeschafts des Gewindebefestigungselements in dem Innengewindeschaftabschnitt (34) des Hohlschafts, sodass der Kopf (38) des Gewindebefestigungselements an der Außenoberfläche des ersten Elements (14) der mindestens zwei Elemente anliegt; und
weiteren Sicherns des Gewindeschafts des Befestigungselements in dem Innengewindeschaftabschnitt des Hohlschafts, sodass eine Spannung auf dem elastischen Schaftabschnitt (36) des Hohlschafts erzeugt wird, um eine elastische Klemmkraft auf die zwei Elemente auszuüben.

13. Verfahren nach Anspruch 12, ferner umfassend den Schritt des Ausgleichens für eine axiale thermische Ausdehnung von mindestens einem von dem Befestigungselement (16), dem Befestigungseinsatz (18) und mindestens einem der mindestens zwei Elemente (12, 14), wenn sie einer Temperaturänderung ausgesetzt sind.

14. Verfahren nach Anspruch 13, wobei das Ausgleichen ein axiales Deformieren des elastischen Schaftabschnitts (36) des Hohlschafts (20) einschließt, wenn das mindestens eine von dem Befestigungselement (16), dem Befestigungseinsatz (18) und mindestens einem der mindestens zwei Elemente (12, 14) die axiale thermische Ausdehnung durchläuft.

## Revendications

1. Système de fixation (10) destiné à fixer au moins deux éléments (12, 14) ensemble, le système de fixation comprenant :
un élément de fixation fileté (16) comprenant une tête (38) et une tige filetée (40) s'étendant dans une direction axiale (22) à partir de la tête, la tête étant configurée pour buter contre une surface extérieure (42) d'un premier un (14) des au moins deux éléments ; et
un insert de fixation (18) comprenant :
un arbre creux (20) s'étendant dans la direction axiale pour être inséré dans un trou traversant (24) s'étendant à travers les au moins deux éléments, l'arbre creux étant configuré pour recevoir l'arbre fileté à une première extrémité axiale (26) de l'arbre creux ; et
une bride de support (30) s'étendant radialement vers l'extérieur à partir d'une seconde extrémité axiale (28) de l'arbre creux, la bride de support étant configurée pour buter contre une surface extérieure (32) d'un second un (12) des au moins deux éléments ;
dans lequel l'arbre creux comporte :
une partie d'arbre filetée intérieurement (34) configurée pour fixer l'arbre fileté reçu dans l'arbre creux, et
une partie d'arbre élastique (36) formée d'une seule pièce avec la partie d'arbre filetée intérieurement, dans laquelle la partie d'arbre élastique est formée axialement entre la partie d'arbre filetée intérieurement et la bride de support.

2. Système de fixation (10) selon la revendication 1, dans lequel la partie d'arbre élastique (36) est formée par au moins une découpe (44) dans l'arbre creux (20).

3. Système de fixation (10) selon la revendication 2, dans lequel la au moins une découpe (44) comporte une pluralité de découpes disposées circonférentiellement autour de l'arbre creux (20).

4. Système de fixation (10) selon la revendication 2 ou la revendication 3, dans lequel au moins une de la au moins une découpe (44) est de forme triangulaire.

5. Système de fixation (10) selon la revendication 2 ou la revendication 3, dans lequel au moins une de la au moins une découpe (44) est de forme circulaire.

6. Système de fixation (10) selon la revendication 2 ou la revendication 3, dans lequel au moins une de la au moins une découpe (44) est de forme linéaire.

7. Système de fixation (10) selon une quelconque revendication précédente, dans lequel l'épaisseur d'une paroi circonférentielle (46) de la partie d'arbre élastique (36) est inférieure à l'épaisseur de la paroi circonférentielle de la partie de tige filetée intérieurement (34).

8. Système de fixation (10) selon une quelconque revendication précédente, dans lequel une paroi circonférentielle (46) de la partie d'arbre élastique (36) est ondulée axialement.

9. Système de fixation (10) selon une quelconque revendication précédente, dans lequel la longueur de la tige filetée (40) de la fixation filetée (16) est inférieure ou égale à la longueur de la partie de tige filetée intérieurement (34) de l'arbre creux (20) de l'insert de fixation (18).

10. Système de fixation (10) selon une quelconque des revendication 1 à 8, dans lequel la longueur de la tige filetée (40) de la fixation filetée (16) est supérieure à la longueur de la partie de la tige filetée intérieurement (34) de l'arbre creux (20) de l'insert de fixation (18) et égale ou inférieure à la longueur de l'arbre creux de l'insert de fixation.

11. Ensemble fixé, comprenant :
un système de fixation (10) selon une quelconque revendication précédente ; et
deux dits éléments (12, 14),
dans lequel :
l'arbre creux (20) est inséré dans le trou traversant (24) et la bride de support (30) est en butée contre la surface extérieure (32) du second un (12) des deux éléments ; et
la tige filetée (40) est fixée dans la partie de tige filetée intérieurement (34) et la tête (38) est en butée contre la surface extérieure (42) du premier un (14) des deux éléments,
de sorte qu'une tension soit créée sur la partie de l'arbre élastique (36) et qu'elle transmette une force de serrage élastique aux deux éléments.

12. Procédé de fixation d'au moins deux éléments (12, 14) ensemble au moyen d'un système de fixation selon l'une quelconque des revendications 1 à 10, le procédé comprenant les étapes suivantes :
l'insertion de la première extrémité axiale (26) de l'arbre creux (20) de l'insert de fixation (18) dans le trou traversant (24) s'étendant à travers les au moins deux éléments, de sorte que la bride de support (30) s'étendant radialement vers l'extérieur à partir de la seconde extrémité axiale (28) de l'arbre creux bute contre la surface extérieure (32) du second élément (12) des au moins deux éléments ;
l'insertion de la tige filetée (40) de la fixation filetée (16) dans la première extrémité axiale de l'arbre creux et la fixation de la tige filetée de la fixation filetée dans la partie de tige filetée intérieurement (34) de l'arbre creux, de sorte que la tête (38) de la fixation filetée vienne buter contre la surface extérieure du premier élément (14) des au moins deux éléments ; et
la fixation en outre de la tige filetée de la fixation dans la partie de tige filetée intérieurement de l'arbre creux, de sorte qu'une tension soit créée sur la partie d'arbre élastique (36) de l'arbre creux pour transmettre une force de serrage élastique aux deux éléments.

13. Procédé selon la revendication 12, comprenant en outre l'étape de prévoir la dilatation thermique axiale d'au moins un de l'élément de fixation (16), de l'insert de fixation (18) et d'au moins un des au moins deux éléments (12, 14) lorsqu'il est exposé à un changement de température.

14. Procédé selon la revendication 13, dans lequel la prévision comporte la déformation axiale de la partie d'arbre élastique (36) de l'arbre creux (20) lorsque le au moins un de l'élément de fixation (16), de l'insert de fixation (18) et d'au moins un des au moins deux éléments (12, 14) subit la dilatation thermique axiale.
